Europäisches Patentamt

European Patent Office

Office européen des brevets

(19)

(11) Veröffentlichungsnummer: **0 037 911**
**B1**

(12) # EUROPÄISCHE PATENTSCHRIFT

(45) Veröffentlichungstag der Patentschrift:
**10.04.85**

(51) Int. Cl.⁴: **B 05 B 13/02,** B 05 B 13/04

(21) Anmeldenummer: **81101917.3**

(22) Anmeldetag: **16.03.81**

(54) Einrichtung zum automatischen Beschichten von Gegenständen.

(30) Priorität: **12.04.80 DE 3014114**

(43) Veröffentlichungstag der Anmeldung:
**21.10.81 Patentblatt 81/42**

(45) Bekanntmachung des Hinweises auf die Patenterteilung:
**10.04.85 Patentblatt 85/15**

(84) Benannte Vertragsstaaten:
**AT CH FR GB IT LI NL SE**

(56) Entgegenhaltungen:
**EP - A - 0 034 687**
**CH - A - 483 887**
**DE - A - 2 644 663**
**FR - A - 2 114 182**
**FR - A - 2 435 329**
**GB - A - 1 107 007**
**GB - A - 2 013 934**
**JP - A - 53 003 438**
**JP - A - 53 102 568**
**US - A - 3 646 521**

(73) Patentinhaber: **Ransburg-Gema AG, Kunklerstrasse 9,**
**CH-9015 St. Gallen (CH)**

(72) Erfinder: **Buschor, Karl, Schneebergstrasse 58,**
**CH-9015 St. Gallen (CH)**

(74) Vertreter: **Vetter, Ewald Otto, Dipl.-Ing.(FH),**
**Bahnhofstrasse 30, D-8900 Augsburg (DE)**

**Beschreibung**

Die Erfindung betrifft eine Einrichtung zum automatischen Beschichten von Gegenständen, mit einer Spritzvorrichtung mit mindestens einer Spritzpistole, an die eine nacheinander verschiedene Arbeitsschritte ausführende Steuervorrichtung angeschlossen ist, mit einer Gegenstände durch bestimmte Beschichtungspositionen hindurchführenden Transportvorrichtung, mit einem synchron zur Vorschubbewegung der Transportvorrichtung Taktsignale erzeugenden, mit der Transportvorrichtung gekoppelten Taktgeber und mit einem Sensor zur Erkennung eines Gegenstandes an der Transportvorrichtung in bestimmtem Abstand vor der Spritzvorrichtung ausserhalb des Sprühbereiches.

Eine solche Einrichtung ist aus der FR-A-2 114 182 bekannt. Vergleichbare ähnliche Einrichtungen zeigen die US-A-3 646 521, die DE-A-2 644 663 und die JP-A-53 3438.

Durch die Erfindung soll die Aufgabe gelöst werden, den konstruktiven Aufwand der Einrichtung zu vereinfachen, unter Berücksichtigung eines geringen Wartungsaufwandes und geringen Energieverbrauchs, jedoch ohne auf die Möglichkeit einer schnellen Anpassung an unterschiedliche Praxisbedingungen verzichten zu müssen.

Diese Aufgabe wird gemäss der Erfindung dadurch gelöst, dass sowohl der Sensor über einen nachgeschalteten Programmgeber mit Programmspeicher als auch der Taktgeber auf einen die Schaltmassnahmen der Steuervorrichtung auslösenden Zähler geschaltet ist.

Begriffserklärungen:

«Beschichten mit einer Spritzvorrichtung» bedeutet Beschichten durch Aufspritzen von Flüssigkeit oder, vorzugsweise, Pulver auf die betreffenden Gegenstände.

«Sensor zur Erkennung eines Gegenstandes» bedeutet eine Vorrichtung zur Erkennung, ob ein Gegenstand zum Beschichten vorhanden ist und, in besonderer Ausbildung der Einrichtung, ob es sich um gleiche oder verschiedene Gegenstände handelt bzw. um welche Gegenstände es sich handelt.

«Taktgeber» kann eine Zeituhr sein, deren Taktzeiten auf die Vorschubbewegung-Geschwindigkeit der Transportvorrichtung abgestimmt ist. Vorzugsweise handelt es sich jedoch bei dem Taktgeber um einen synchron mit der Transportvorrichtung angetriebenen Impulsgeber, der je Teilstrecke des von der Transportvorrichtung zurückgelegten Weges ein Impulssignal abgibt, vorzugsweise einen Rechteckimpuls. Das gleiche gilt für einen gegebenenfalls verwendeten weiteren Taktgeber für die Positionierung der Spritzvorrichtung oder deren Spritzpistolen mittels einer weiteren Transportvorrichtung.

Mehrere Ausführungsformen werden im folgenden mit Bezug auf die Zeichnungen beschrieben. In diesen zeigen:

Fig. 1 eine schematische, perspektivische Darstellung einer Einrichtung nach der Erfindung, und

Fig. 2 eine schematische Darstellung einer weiteren Ausführungsform nach der Erfindung, und

Fig. 3 eine schematische Ansicht von oben in eine Beschichtungskabine einer Einrichtung nach der Erfindung gemäss Fig. 2.

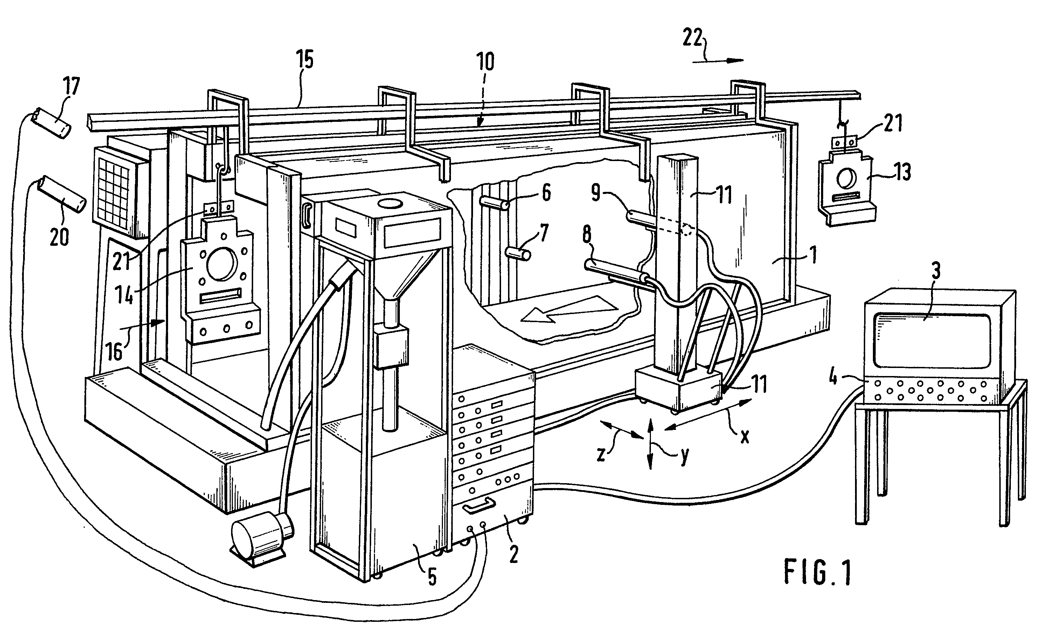

Fig. 1 zeigt eine Einrichtung zum automatischen Beschichten von Gegenständen mit Pulver in einer Beschichtungskabine 1. Vor dieser steht ein Steuergerät 2 mit einem eingebauten Mikroprozessor, einem Bildschirmgerät 3 zur Anzeige von Programmabläufen und mit einer Schreibmaschine 4 zum Eingeben, Ändern und Abrufen von Programmen.

Einem Pulverbehälter 5 wird in an sich bekannter Weise Pulver pneumatisch entnommen und der jeweils in Betrieb befindlichen Spritzpistole 6 bzw. 7 bzw. 8 bzw. 9 zugeführt. Die Spritzpistolen 6 und 7 befinden sich auf einem Positionierständer 10, und die Pistolen 8 und 9 befinden sich auf einem Positionierständer 11. Die Pistolen 6 bis 9 sind, teilweise zusammen mit ihren Positionierständern, in allen 3 möglichen Richtungen (x, y und z) in die jeweils erforderliche Position bewegbar und ragen durch Öffnungen in den Wänden der Kabine 1 hindurch. Das zu versprühende Pulver wird in an sich bekannter Weise pneumatisch gefördert und kann für den Sprühvorgang gegebenenfalls elektrostatisch aufgeladen werden.

Die zu beschichtenden Gegenstände 13 und 14 werden an einer Förderkette 15 durch die Kabine 1 transportiert. Am Anfang 16 der Kabine 1 befindet sich ein Sensor 17, welcher für jede Teilstrecke des von der Kette 15 zurückgelegten Weges ein Taktsignal erzeugt. Bei jedem Taktsignal, oder nach einer bestimmten Anzahl von Taktsignalen, welche dem Steuergerät 2 zugeführt werden, wird ein bestimmter Arbeitsschritt ausgeführt. Ein Arbeitsschritt kann folgendes bedeuten: Umschalten des Beschichtungsvorganges von einer Beschichtungsposition bei den Pistolen 7 und 9 zu einer Beschichtungsposition bei den Pistolen 6 und 8, oder ein Wechsel von einer Pulversorte auf eine andere Pulversorte, oder das Einschalten des Beschichtungsvorganges überhaupt, oder das Beenden des Beschichtungsvorganges, oder das Einschalten von Hochfrequenz zur elektrostatischen Pulveraufladung, oder ein Verschieben einer der Pistolen 6 bis 9 in eine andere Position, oder das Pendeln einer oder mehrerer dieser Pistolen zwischen zwei bestimmten Positionen, oder das Mitlaufen der Pistolen mit dem zu beschichtenden Gegenstand 13 bzw. 14, oder das Bewegen der Pistolen entgegen der Bewegungsrichtung der Gegenstände 13 bzw. 14 usw. Die Taktsignale des Sensors, vorzugsweise Rechteckimpulse, können, entsprechend der dargestellten Ausführungsform, durch optisches, elektrisches oder magnetisches Abtasten von Markierungen an der Förderkette 15 der Transportvorrichtung synchron zu der Förderbewegung dieser Kette erzeugt werden.

Ferner ist am Kabineneingang ein Sensor 20 angeordnet, der ein Codeplättchen 21 der Gegenstände 13 bzw. 14 abtastet und dadurch feststellt, ob ein Gegenstand vorhanden ist und um welche Art von Gegenstand es sich handelt.

Der Programmspeicher des Steuergerätes 2 weiss, wieviel Takte der zu beschichtende Gegenstand 13, 14 vom Taktsignalsensor 17 bis zu der ersten Beschichtungsposition bei den Pistolen 6–9 zurücklegen muss. Erhält der Speicher nunmehr vom Objektsensor 20 ein Signal, dass ein Gegenstand 13, 14 in die Kabine einläuft, dann zählt er die entsprechende Anzahl von Takten des Taktsensors 17, bis der Gegenstand 13 bzw. 14 die Beschichtungsposition erreicht hat. Dann beginnt das eigentliche Beschichtungsprogramm. Die Sensoren 17 und 20 sind deshalb mit Abstand von den Beschichtungspositionen angeordnet, damit sie vom Beschichtungsmaterial nicht verschmutzt werden.

Ein Pfeil 22 gibt in Fig. 1 die Bewegungsrichtung der Förderkette 15 an. Die Förderkette 15 ist eine endlose Kette, jedoch ist in Fig. 1 nur der Kettenteil dargestellt, welcher die Gegenstände 13, 14 durch die Kabine 1 zu den Beschichtungspositionen führt. Die Doppel-Pfeile x, y und z geben die möglichen Bewegungsrichtungen der Spritzpistolen 6, 7, 8 und 9 an. X ist eine Bewegung parallel zur Förderkette 15, y ist eine Bewegung in Vertikalrichtung, und z ist eine Bewegung in die Kabine hinein bzw. aus dieser heraus. Die einzelnen Bewegungen x, y und z können einander überlagert werden, so dass die Pistolen in beliebigen Richtungen bewegt werden können. Auch ein Gelenk zum Verschwenken der Pistolen kann vorgesehen sein. Die Pistolen können wahlweise zwischen zwei Positionen pendeln, oder in eine jeweils feste Position gebracht werden, oder mit dem zu beschichtenden Gegenstand 13, 14 mitlaufen, oder sich entgegengesetzt zu diesen Gegenständen bewegen.

Bei einer Ausführungsform einfachster Art können die Spritzpistolen 6 bis 9 fest montiert und auf die zu beschichtenden Gegenstände 13, 14 gerichtet sein. Wenn ein Gegenstand kompliziert geformt ist, so entstehen durch Turbulenzen und Verzerrungen des zur Aufladung des Beschichtungsmaterials dienenden elektrischen Feldes ungleichmässige Beschichtungen. Um die Beschichtungsleistung zu verbessern, muss die Wirkungsweise der Pistolen verändert werden, während der Gegenstand an der Pistole vorbeifährt. Dazu sind folgende Massnahmen vorgesehen:

Die an der betreffenden Pistole anliegende Hochspannung wird verändert, die ausgestossene Pulvermenge je Zeiteinheit wird dem zu beschichtenden Gegenstand angepasst, die Wolkenform des aus der Pistole ausgestossenen Pulvers wird dem Gegenstand angepasst und die Pistole wird in eine günstige Lage mit Bezug auf den Gegenstand gebracht.

Es kommt aber auch oft vor, dass nicht wie in Fig. 1 die Gegenstände 13 und 14 immer die gleichen sind, sondern es werden wechselweise einige Gegenstände der Sorte A und dann wieder einige Gegenstände der Sorte B usw. herangeführt. Der Objektsensor 20 am Kabineneingang 16 stellt nun fest, welcher Gegenstands- bzw. Objekttyp gerade in die Kabine 1 einfährt. Diese Information wird durch ein Schieberegister im Steuergerät 2 synchron mit der Vorschubbewegung der Kette 15 bis zu einer der Pistolen, beispielsweise der Pistole 8 verschoben. Der Sensor 17 erzeugt synchron zur Bewegung der Kette 15 beispielsweise alle 2 cm je Kettenvorschub ein Taktsignal und wirkt dadurch als Taktgeber. Dieses Taktsignal kann verwendet werden:

a) zur Steuerung des Schieberegisters und

b) zur Steuerung des Programmablaufes, d.h. dadurch wird der Gegenstand in Durchlaufrichtung und in Abständen von 2 cm in theoretische Linien unterteilt. In jeder Linie ist eine Veränderung der Pistolenleistung und der geometrischen Lage der Pistolen möglich.

Das im Mikroprozessor vorhandene Programm muss häufig neuen Bedingungen angepasst werden. Solche Korrekturen können, in der genannten 2-cm-Unterteilung, über die Tastatur 4 in den Mikroprozessor eingegeben werden. Korrekturen des Programms werden leider häufig auch deshalb erforderlich, weil Veränderungen der Pulverqualität und des Klimas in der Kabine Einfluss auf die Beschichtungsleistung haben. Deshalb ist die Einrichtung so ausgelegt, dass die Leistung der Pistolen 6 bis 9 manuell um einen gewissen Prozentsatz erhöht oder erniedrigt werden kann.

Programmiert werden beispielsweise:

a) die Programmschritte, also bei welchem Takt oder nach wieviel Takten ein bestimmter Beschichtungs- oder Arbeitsschritt durchgeführt werden muss und wielange der betreffende Schritt oder Arbeitsvorgang dauern soll.

b) welche Gegenstände 13 bzw. 14 beschichtet werden sollen, also die Arten der mit einem bestimmten Programm zu beschichtenden Gegenstände.

c) welche der Pistolen 6 bis 9 und zu welchem Zeitpunkt verwendet wird.

d) welche Spannung für das elektrische Beschichtungsfeld, welche Pulverausstossmenge je Zeiteinheit, welche Luftmenge mit dem Pulver ausgestossen und welcher Strahlwinkel bei den Pistolen verwendet werden soll.

e) welche Farbe bzw. Pulversorte verwendet werden soll.

f) welcher Positionierständer 10 bzw. 11 verwendet wird.

g) welche Achse x, y oder z für die Einstellung verwendet wird.

h) welche Geschwindigkeiten verwendet werden für die Förderkette und die Bewegungen der Pistolen.

i) in welche Positionen die betreffenden Teile in x-, y- oder z-Richtung bewegt werden sollen.

Hierfür sind in dem Steuergerät 2 Digital-Analogwandler vorgesehen.

Bei Vorhandensein von mehreren Pistolen kann eine als Reserve-Pistole dienen, die bei Ausfall einer anderen Pistole deren Funktion übernimmt.

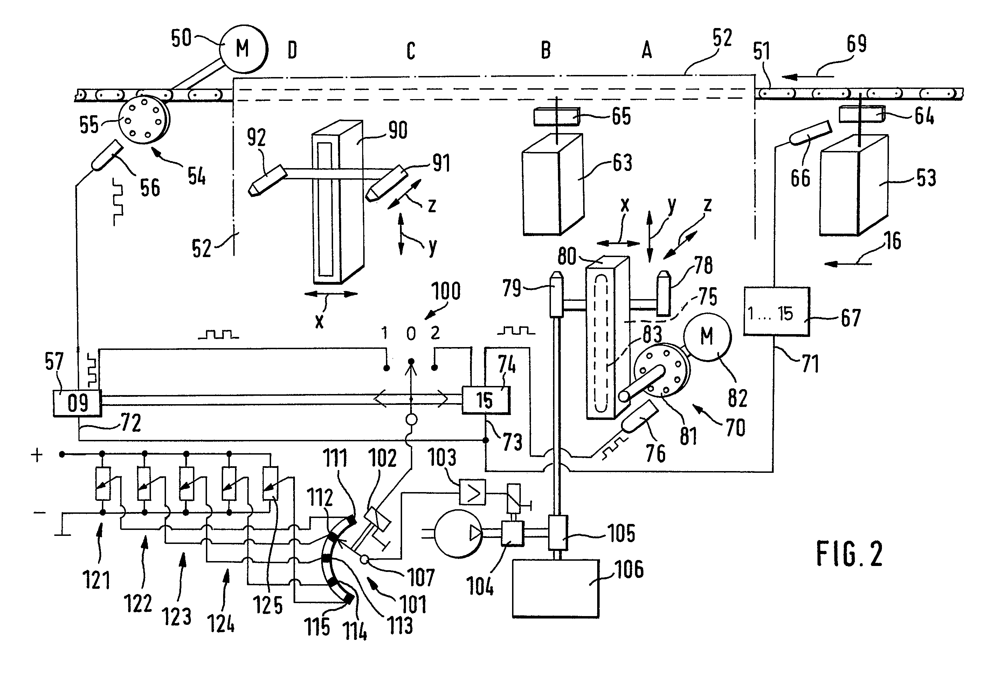

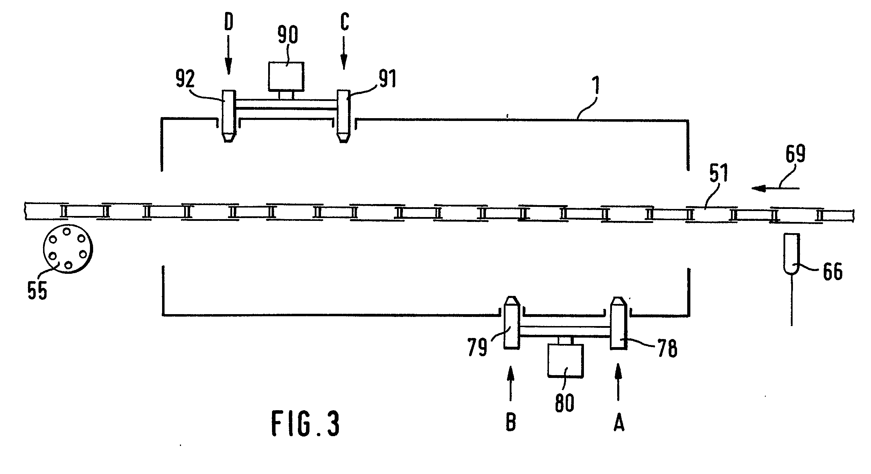

Bei der Ausführungsform nach den Figuren 2 und 3 werden hier nur die Teile beschrieben, die von Teilen der Fig. 1 abweichen, oder zum besseren Verständnis nochmals erörtert werden müssen.

Die Figuren 2 und 3 zeigen eine von einem Motor 50 angetriebene Förderkette 51 einer Transportvorrichtung für die in einer Beschichtungskabine 52 zu beschichtenden Gegenstände bzw. Objekte 53, 63.

Ein Taktgeber 54 weist eine von der Förderkette 51 angetriebene Lochscheibe 55 auf, deren Löcher von einem Sensor 56 abgetastet werden. Jedes abgetastete Loch entspricht beispielsweise einer von der Förderkette 51 zurückgelegten Vorschub-Teilstrecke von 2 cm. Dadurch erzeugt der Sensor 56 alle 2 cm Kettenvorschubbewegung ein Impulssignal, vorzugsweise einen Rechteckimpuls. Der Sensor 56 ist beispielsweise eine Lichtschranke. Die Taktimpulse werden von einem Zähler 57 gezählt.

Jeder zu beschichtende Gegenstand 53 bzw. 63 ist mit einem Code-Plättchen 64 bzw. 65 versehen, welche von einem Code-Sensor 66 am Kabineneingang 16 abgetastet werden. Der Code-Sensor 66 stellt fest, ob ein zu beschichtender Gegenstand 53 bzw. 63 in die Kabine einläuft und um welche Art von Gegenstand es sich handelt. Jeder Gegenstand erfordert eine andere Beschichtung und deshalb auch ein anderes Programm der im Speicher des Steuergerätes vorhandenen Programme.

Der Code-Sensor 66 ist an den Programmspeicher eines Mikroprozessors 67 angeschlossen, der ausserdem mit einem Schieberegister versehen ist.

Bei dieser Ausführungsform befindet sich der Taktsignalgeber 54 am Ende der Beschichtungskabine, während bei der Ausführungsform nach Fig. 1 sowohl der Code-Sensor als auch der Taktgeber-Sensor am Kabineneingang angeordnet ist. Die Bewegungsrichtung der Förderkette 51 ist in den Figuren 2 und 3 durch einen Pfeil 69 angegeben.

Der Ausgang 71 des Programmspeichers des Mikroprozessors 67 ist an einen Eingang 72 des Zählers 57 und an einen Eingang 73 eines weiteren Zählers 74 angeschlossen.

Der weitere Zähler 74 zählt die Impulse eines Taktgebers 70, der synchron zu Positionierbewegungen eines Hubgetriebes pro Teilbewegungsstrecke dieses Hubgetriebes jeweils ein Impulssignal an den weiteren Zähler 74 abgibt. Das Hubgetriebe 75 dient zur Positionierung von Spritzpistolen 78 und 79 eines Positionierständers 80. Der Taktgeber 70 enthält z.B. eine Lichtschranke 76, welche eine Lochscheibe 81 abtastet, die auf einer Antriebswelle eines Motors 82 für das Hubgetriebe 75 sitzt. Das Hubgetriebe 75 kann mit einer Hubkette 83 zur Positionierung der Pistolen 78 und 79 versehen sein.

Ein weiterer Positionierständer 90 mit Spritzpistolen 91 und 92 kann in gleicher Weise ausgebildet sein und wirken wie der Positionierständer 80. Die Pistolen und gegebenenfalls die gesamten Ständer können in der genannten x-, y- und z-Richtung bewegbar sein, wie dies durch die Pfeile angedeutet ist.

Die Zähler 57 und 74 arbeiten mit einem Umschalter 100 zusammen, der bestimmt, ob ein Drehwähler 101 Impulssignale vom einen Zähler 57 oder vom anderen Zähler 74 bekommt. Der Drehwähler 101 ist ein durch einen Magneten 102 angetriebener Schrittschalter. Mit dem Drehwähler 101 kann beispielsweise über einen Verstärker 103, welcher Spannungssignale an seinem Eingang in Stromsignale an seinem Ausgang umwandelt, und über einen stromgesteuerten Druckregler 104 der Pressluftdruck eines Injektors 105 geregelt werden, welcher von einem Vorratsbehälter 106 das zur Beschichtung dienende Pulver einer oder mehreren der Pistolen 79 usw. zugeführt. Der Verstärker 103 ist an einen Mittelanschluss 107 des Drehwählers 101 angeschlossen. An die abgreifbaren Anschlüsse 111, 112, 113, 114 und 115 des Drehwählers 101 sind einstellbare Widerstände 121, 122, 123, 124 und 125 angeschlossen, von welchen unterschiedliche Spannungen abgegriffen werden, entsprechend dem gewünschten Pressluftdruck am Injektor 105.

Dadurch kann der Drehwähler 101 einen Schritt vollziehen entweder in Abhängigkeit von der Bewegung der Förderkette 51 oder von der Bewegung der Spritzpistolen 78 bzw. 79 oder deren Positionierständer 80 längs einer der Bewegungsachsen x, y oder z.

Der Programmspeicher des Mikroprozessors 67 erhält vom Code-Sensor 66 durch Binärcode angezeigt, welches Objekt bzw. welcher Gegenstand 53 bzw. 63 in die Kabine einläuft, und speichert diese Information in einem Schieberegister, bis das Objekt 53 bzw. 63 eine bestimmte Position A bzw. B bzw. C bzw. D usw. erreicht hat, bei welcher in einem bestimmten Arbeitsschritt ein Beschichtungsvorgang durchgeführt wird. In diesem Programmspeicher wird entschieden, ob beispielsweise durch den Zähler 57 bestimmt wird, dass am Drehwähler 101 ein Schritt 112 (entspricht dem Wähleranschluss 112) beispielsweise neun Takte (Taktsignale des Impulsgebers 54) lang dauern soll. Dadurch bewegt sich bei diesem Beispiel die Förderkette 51 neun Takte, d.h. 9 × 2 cm = 18 cm, weiter, bis auf den Schritt 113 am Drehwähler 101 umgeschaltet wird.

Bei dem Schritt 113 (Anschluss 113 am Drehwähler) ist denkbar, dass dieser von der Hubbewegung des Positionierständers 80 abhängig gemacht werden soll, in welchem Falle dann der andere Zähler 74 in Funktion tritt.

Die jeweilige Schrittdauer kann auch von der Zeit abhängig gemacht werden.

Die ganze Einrichtung kann auf der Basis von diskreten Bauelementen aufgebaut sein. In der Praxis ist jedoch eine durch einen Mikroprozessor gesteuerte, sog. frei programmierbare Steuerung vorzuziehen. Diese bringt zahlreiche Erleichterungen bei der Programmerstellung:

Im vorliegenden Beispiel wird sich, während des Programmierens, das Potentiometer 123 von Schritt 113 automatisch auf den Wert von Schritt 112 einstellen. Für die Praxis muss man sich eine Vielzahl von Potentiometern vorstellen. Bei jedem neuen Schritt müssen also nur die Werte eingegeben werden, welche eine Änderung erfahren. Die Potentiometerwerte können durch eine Tastatur, entsprechend 4 von Fig. 1, in Form von Ziffern eingegeben werden. Gleichzeitig können auf einem Bildschirm, entsprechend 3 von Fig. 1, die programmierten Werte sichtbar gemacht werden.

Beispiel:

| Position: A | | Objekt-Nr.: 04 | | | | | Schritt-Nr.: 02 | |
| --- | --- | --- | --- | --- | --- | --- | --- | --- |
| TA | FA · | x – KO | y – KO | z – KO | P 1 | | P 2 . . . | P 10 |
| 09 | 00 | <05 | O 78 | V 00 | KV | 90 | 00 | 00 |
| +0 | | >0 | U 22 | H 66° | PU | 77 | 00 | 00 |
| −0 | | | H 40 | > 0 | DO | 43 | 00 | 00 |
| | | | T 40 | < 0 | ZE | 65 | 00 | 00 |
| | | | P 00 | P 0 | ST | 80 | 00 | 00 |

```
TA    = Anzahl der Takte pro Schritt
FA    = Farbe bzw. Art des Beschichtungspulvers
x-KO  = x – Koordinate
        <  Anzahl der Takte bei Bewegung mit der Kette
        >  Anzahl der Takte entgegen der Bewegung der Kette
y-KO  = y – Koordinate
        O  = Hubbegrenzung nach oben
        U  = Hubbegrenzung nach unten
        H  = Hubgeschwindigkeit
        T  = Senkgeschwindigkeit
P = Positionieren des Y-Wagens auf den Wert U
Z-KO  = z – Koordinate
        V  = Position vorne
        H  = Position hinten
        >  = Geschwindigkeit vor
        <  = Geschwindigkeit zurück
P 1   = Pistole 1
P 2... = Pistole 2 . . .
KV    = Spannung 0–100 kV
PU    = Pulverförderdruck am Injektor
DO    = Pulverdosierdruck am Injektor
ZE    = Zerstäuberdruck
ST    = Strahlwinkel der Spritzdüse mit Bezug auf das Objekt
```

## Patentansprüche

1. Einrichtung zum automatischen Beschichten von Gegenständen, mit einer Spritzvorrichtung mit mindestens einer Spritzpistole, an die eine nacheinander verschiedene Arbeitsschritte ausführende Steuervorrichtung (2, 67) angeschlossen ist, mit einer Gegenstände durch bestimmte Beschichtungspositionen hindurchführenden Transportvorrichtung (15, 51), mit einem synchron zur Vorschubbewegung der Transportvorrichtung (15; 51) Taktsignale erzeugenden, mit der Transportvorrichtung gekoppelten Taktgeber (17; 54), und mit einem Sensor (20; 66) zur Erkennung eines Gegenstandes an der Transportvorrichtung in bestimmtem Abstand vor der Spritzvorrichtung (10, 11; 80, 90) ausserhalb des Sprühbereiches, dadurch gekennzeichnet, dass sowohl der Sensor (20; 66) über einen nachgeschalteten Programmgeber (67) mit Programmspeicher als auch der Taktgeber auf einen die Schaltmassnahmen der Steuervorrichtung auslösenden Zähler (57) geschaltet ist.

2. Einrichtung nach Anspruch 1, dadurch gekennzeichnet, dass der Programmgeber (67) ein Mikroprozessor ist.

3. Einrichtung nach Anspruch 1 oder 2, dadurch gekennzeichnet, dass zur Durchführung bestimmter Arbeitsschritte ein weiterer Taktgeber (70), der synchron zu Bewegungen einer Spritzpistole (78, 79) der Spritzvorrichtung (80) Taktsignale erzeugt, vorgesehen ist, dass sowohl der Sensor (20; 66) über den nachgeschalteten Programmgeber (67) mit Programmspeicher als auch der weitere Taktgeber (70) auf einen Schaltmassnahmen der Steuervorrichtung auslösenden weiteren Zähler (74) geschaltet sind, und dass eine Umschaltvorrichtung (100) zur programmabhängigen Umschaltung der Steuervorrichtung auf den einen oder den anderen Zähler vorgesehen ist.

## Claims

1. Apparatus for the automatic coating of articles, with a spraying device having at least one spray gun to which there is connected a control device (2, 67) which effects a sequence of different working steps, with a transportation device (15, 51) which conveys articles through specific coating positions, with a timing generator (17; 54) linked with the transportation device and producing timing signals synchronously with the advancing movement of the transportation device (15; 51), and with a sensor to detect an article on the transportation device at a specific distance in front of the spraying device (10, 11; 80, 90), outside the spraying zone, characterised in that both the sensor (20; 66), via a subsequently connected programme generator (67) with a programme store, and the timing generator are connected to a counter (57) which initiates the switching steps of the control device.

2. Apparatus according to Claim 1, characterised in that the programme generator (67) is a micro-processor.

3. Apparatus according to Claim 1 or 2, characterised in that a further timing generator (70) is provided for effecting certain operating steps, and produces timing signals synchronously with the movements of a spray gun (78, 79) in the spraying device (80), that both the sensor (20; 66), via the subsequently connected programme generator (67) with a programme store, and the further timing generator (70) are connected to a further counter (74) which initiates the switching steps of the control device, and that a switch-over device (100) is provided for switching the control device to one counter or the other, depending upon the programme.

**Revendications**

1. Dispositif de revêtement automatique d'objets, comportant un dispositif de pulvérisation muni d'au moins un pistolet auquel est relié un dispositif de commande (2, 67) exécutant successivement différentes étapes de travail, un transporteur (15, 51) faisant passer des objets par des positions de revêtement déterminées, un rythmeur (17; 54) couplé au transporteur et engendrant des signaux de rythme de façon synchrone du mouvement d'avancement du transporteur (15; 51) et un capteur (20; 66) servant à reconnaître un objet sur le transporteur à une distance déterminée du dispositif de pulvérisation (10, 11; 80, 90), hors de la zone de pulvérisation, caractérisé en ce que, d'une part, le capteur (20; 66), par l'intermédiaire d'un programmateur (67) faisant suite avec mémoire de programme, d'autre part aussi le rythmeur sont branchés sur un compteur (57) déclenchant les mesures de couplage du dispositif de commande.

2. Dispositif selon la revendication 1, caractérisé en ce que le programmateur (67) est un microprocesseur.

3. Dispositif selon l'une des revendications 1 et 2, caractérisé en ce que pour l'exécution d'étapes de travail déterminées est prévu un autre rythmeur (70) qui engendre des signaux de rythme de façon synchrone de mouvements d'un pistolet (78, 79) du dispositif de pulvérisation, en ce que, d'une part, le capteur (20; 66), par l'intermédiaire du programmateur (67) faisant suite avec mémoire de programme, d'autre part, aussi l'autre rythmeur (70) sont branchés sur un autre compteur (74) déclenchant des mesures de couplage du dispositif de commande, et en ce qu'il est prévu un dispositif de commutation (100) pour commuter le dispositif de commande, sous la dépendance du programme, à l'un ou à l'autre compteur.

FIG.1

0 037 911

FIG. 2

0 037 911

FIG.3